# EUROPEAN PATENT APPLICATION

(11) **EP 4 706 974 A1**
(43) Date of publication of application: **11.03.2026**
(21) Application number: 25200703.4
(22) Date of filing: 08.09.2025
(51) Int. Cl.: B41J 11/42, B41J 11/46, B41J 11/66, B41J 15/04, G06F 3/12, B41J 11/00

(54) **RECORDING APPARATUS**

(30) Priority: 09.09.2024 JP 2024155278
(71) Applicant: Canon Kabushiki Kaisha, Tokyo, 146-8501 (JP)
(72) Inventor: ABE, Asuka, Ohta-ku, Tokyo, 146-8501 (JP)
(74) Representative: TBK

(57) **Abstract**

A recording apparatus includes a setting unit for providing a setting for collecting a product, in advance, when a plurality of images is to be recorded consecutively onto a sheet, for a first job and a second job following the first job, the product including a first image recorded on the sheet for the first job. When the setting is made by the setting unit, and a feeding portion and a winding portion are caused to execute a rewinding operation for conveying the sheet in a reverse conveying direction, the control portion executes a first operation of starting recording a second image for the second job following the first job, on a second area following a first area of the sheet, the first area being an area where the first image is recorded, and stopping recording the second image halfway through.

## Description

### TECHNICAL FIELD

The present disclosure relates to a recording apparatus that performs recording on a roll sheet, and allows a product to be removed from a winding portion on a per-job basis.

### BACKGROUND

Conventionally, in a digital printing machine (recording apparatus) that executes printing (recording) on a rolled sheet of paper (roll sheet) as a recording medium, there are cases in which a plurality of images is printed (recorded) consecutively. With such printing, there are times in which a part of the roll sheet for which printing has already been finished and wound on the winding portion (recorded part of the roll sheet) is cut on a per-job basis (on a per-image basis), as a product. In such a case, generally, after the printed roll sheet is cut on a per-job basis, the product is removed from the winding portion, and the leading end of the remaining sheet after cutting is attached to the winding portion. The next image is printed from the point thereon. When printing is performed in such a manner, the part between the leading end of the sheet attached to the winding portion and the part having already been recorded is discarded as blank without being subjected to printing, because such a part has already passed through the recording portion, and the paper corresponding to such a part is wasted. Japanese Patent Application Laid-open No. 2022-148951 discloses a method of reducing the amount of wasted paper at the time when there is an interruption in the printing. In other words, disclosed is a method of completing printing, including the fixing process, of a first job having been executed at the point in time at which a cause of interruption has occurred, rewinding the sheet to the position at which a second job is to be started, stopping the operation, and starting printing of the second job after the cause of the interruption is eliminated.

### SUMMARY

However, the technique disclosed in Japanese Patent Application Laid-open No. 2022-148951 assumes a configuration requiring a user to manually rewind the sheet. In other words, to execute the rewinding operation, involvement of a user has been necessary in making the determination and operating the apparatus.

The present disclosure is directed to provide a technique capable of improving the usability at the time of recording a plurality of jobs.

The present disclosure in its one aspect provides a recording apparatus as specified in claims 1 to 20.

According to the present disclosure, the quality of a recorded product can be ensured while reducing the wasted paper at the time of recording a plurality of jobs.

Features of the present disclosure will become apparent from the following description of embodiments with reference to the attached drawings. The following description of embodiments is described by way of example.

### BRIEF DESCRIPTION OF THE DRAWINGS

FIG. 1 is a diagram illustrating a configuration of a recording apparatus, as one embodiment of the present disclosure;
FIG. 2 is a block diagram illustrating functions of the recording apparatus, as one embodiment of the present disclosure;
FIG. 3 is a flowchart at the time of basic printing;
FIG. 4 is a flowchart at the time of rewinding-controlled printing;
FIG. 5 is a flowchart for determining the duration of a conveying stop made in the process of the rewinding-controlled printing;
FIG. 6A is a diagram pertinent to the movement of the roll sheet, illustrating the setting prior to a printing stop made in the process of the rewinding-controlled printing;
FIG. 6B is a diagram pertinent to the movement of the roll sheet, illustrating the setting during the printing stop made in the process of the rewinding-controlled printing;
FIG. 6C is a diagram pertinent to the movement of the roll sheet, illustrating how the product of a first job is cut off, in the process of the rewinding-controlled printing;
FIG. 6D is a diagram pertinent to the movement of the roll sheet, illustrating how the leading end of the roll sheet 111 is attached to a winding core of a sheet ejecting device 105, in the process of the rewinding-controlled printing;
FIG. 6E is a diagram pertinent to the movement of the roll sheet, illustrating the setting after a print restart button is pressed by a user and the printing is restarted, in the process of rewinding-controlled printing;
FIG. 7 is a diagram illustrating an example of a UI screen displayed in the process of the rewinding-controlled printing;
FIG. 8 is a diagram illustrating an example of a UI screen displayed in the process of the rewinding-controlled printing;
FIG. 9 is a diagram illustrating an example of a UI screen displayed in the process of the rewinding-controlled printing; and
FIG. 10 is a diagram illustrating an example of a UI screen displayed in the process of the rewinding-controlled printing.

### DESCRIPTION OF THE EMBODIMENTS

Modes for implementing the present disclosure will now be described in detail, on the basis of examples, with reference to the drawings. However, it is to be understood that dimensions, materials, shapes, relative arrangements, and the like of components described in the embodiment are intended to be changed as deemed appropriate in accordance with configurations and various conditions of apparatuses to which the disclosure is to be applied. In other words, the scope of the present disclosure is not intended to be limited to the embodiment described below. In addition, while a plurality of features is described in the embodiments, all of the plurality of features are not necessarily essential to the disclosure, and the plurality of features may be combined with each other in any way. Moreover, in the accompanying drawings, the same reference numeral is assigned to the same or similar component, and redundant descriptions thereof will be omitted.

### Embodiment

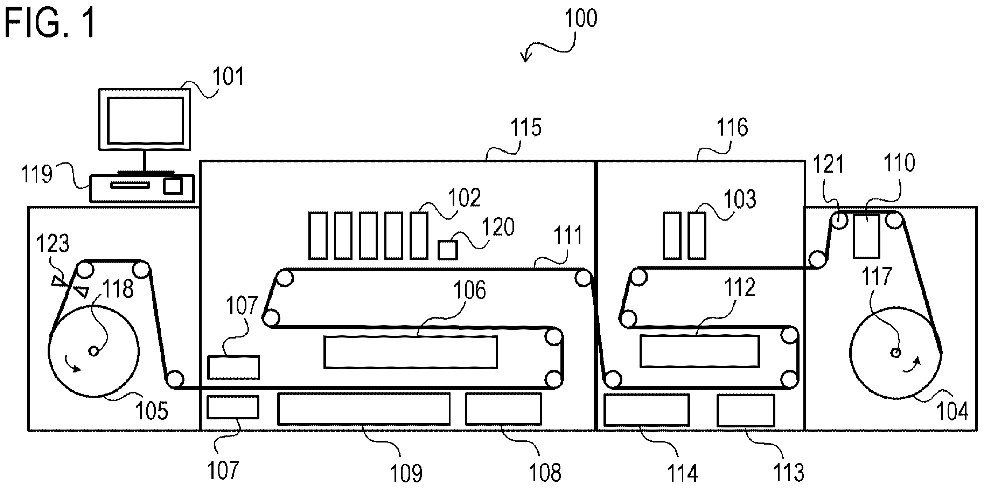

FIG. 1 illustrates an example of a configuration of a recording apparatus according to an embodiment of the present disclosure. This recording apparatus 100 according to the embodiment is an apparatus for recording (forming) an image on a continuous sheet of paper (hereinafter, referred to as a roll sheet) 111 enabled for consecutive image recording, which is used in the embodiment. Images are recorded by discharging ink, as a recording liquid, onto the roll sheet 111.

The recording apparatus 100 includes a sheet feeding device 104 (feeding portion) configured to feed the roll sheet (roll sheet) 111 that is a recording medium into a sheet conveying passage, and a sheet ejecting device 105 (winding portion) configured to wind the roll sheet 111. The roll sheet 111 includes a rolled part wound as a roll and supported rotatably by the sheet feeding device 104. The leading end of a sheet-like part having been pulled out of the rolled part is wound and held in the sheet ejecting device 105, as a rolled part having already been subjected to recording. In other words, the roll sheet 111 is conveyed along a predetermined sheet conveying passage extending between the sheet feeding device 104 and the sheet ejecting device 105, by both of the sheet feeding device 104 and the sheet ejecting device 105 executing operations of rotating the respective rolled parts.

The recording apparatus 100 also includes a recording unit 116 configured to perform spot color printing and a recording unit 115 configured to perform basic color printing on the roll sheet 111 between the sheet feeding device 104 and the sheet ejecting device 105. The recording unit 115 records images using process color inks representative examples of which are those of cyan (C), magenta (M), yellow (Y), and black (K). The recording unit 116 records images using a spot color ink that is an ink for expanding the color gamut or for adding functionality, as an example, or white ink as a primer, as another example. The recording apparatus 100 also has a user interface (hereinafter, abbreviated as a UI) operation panel 101. The recording apparatus 100 is also provided with a cutter portion 123 (cutting portion) for cutting off a recorded part (a part having been subjected to recording) of the roll sheet 111 as a product (recorded sheet). The cutter portion 123 may be provided with a cutting device such as a cutter as a part of the recording apparatus 100, or may be a part exposing a part of the roll sheet 111 so as to enable a user to manually cut the roll sheet 111 using a cutting tool such as a cutter or a pair of scissors.

The sheet feeding device 104 is a device configured to feed the roll sheet 111 into the sheet conveying passage inside of the recording apparatus 100. The sheet feeding device 104 conveys the roll sheet 111 wound around the sheet core into the recording unit 116 at a constant speed, via a plurality of rollers (including conveying rollers and sheet feeding rollers), by rotating the sheet core of the roll sheet 111 about a rotating shaft 117.

The sheet ejecting device 105 is a device configured to wind the roll sheet 111 being fed from the recording apparatus 100 into a roll, about a sheet core. In the sheet ejecting device 105, the roll sheet 111 is wound about the sheet core mounted on the rotating shaft 118, and held as a roll, as illustrated in FIG. 1, for example. The sheet ejecting device 105 is a device configured to wind the roll sheet 111 being fed onto the sheet core via a plurality of rollers 121 (such as conveying rollers and sheet ejecting rollers) about the rotating shaft 118, at a constant speed, as a product of the roll sheet 111, by rotating the roll sheet 111 about the rotating shaft 118.

The structures for holding the roll sheet 111 inside of the sheet feeding device 104 and the sheet ejecting device 105, respectively, are not limited to specific structures, and structures other than those described in the embodiment may also be used. For example, a configuration including a spindle as a winding core attached to flanges, as members for holding the roll sheet 111, may be used. The leading end of the sheet is then attached to the spindle so that the roll sheet 111 can be wound therearound by driving spindle gears provided on the outer sides of the flanges. It is also possible to use what is called a coreless holding structure in which only the respective axial ends of the rolled part of the roll sheet 111 are held by a pair of respective flange holding members.

Before starting printing, the roll sheet 111 in the sheet feeding device 104 is passed to the sheet ejecting device 105, that is, passed from upstream to downstream of the sheet conveying passage of the roll sheet 111. To begin with, the roll sheet 111 is set on the sheet feeding device 104, and the leading end of the roll sheet 111 is passed over a skew correction device 110. The roll sheet 111 is then passed under a printing device 103 (second recording portion) in the recording unit 116. The printing device 103 in this embodiment is a device for printing (recording) a spot color (e.g., white ink) other than the basic printing colors (CMYK). The roll sheet 111 is then passed under a drying device 112 (second drying portion), and passed over cooling devices 113, 114 (second cooling portion). The roll sheet 111 is then passed under a mark detection sensor 120 (first detection portion) and the printing device 102 (first recording portion) in the recording unit 115, under the drying device 106 (first drying portion), and over cooling devices 108, 109 (first cooling portion). In this embodiment, the mark detection sensor 120 is used in aligning the image to be formed by the printing device 102 to the image having been formed by the printing device 103. However, without limitation thereto, a scanner device may also be used, instead. The printing device 102 in this embodiment is a device for printing the basic printing colors (CMYK). The roll sheet 111 is then passed through a connection scanner device 107 (second detection portion), and wound around the sheet ejecting device 105. After the roll sheet 111 is passed through the recording apparatus 100, a print job is input to a control PC 119 for controlling the recording apparatus 100. After the print job is input, printing is started by pressing a print start button on the UI operation panel 101. The connection scanner device 107 reads the printed image, and the control PC 119 analyzes the read image, to inspect for the presence of any defects on the printout.

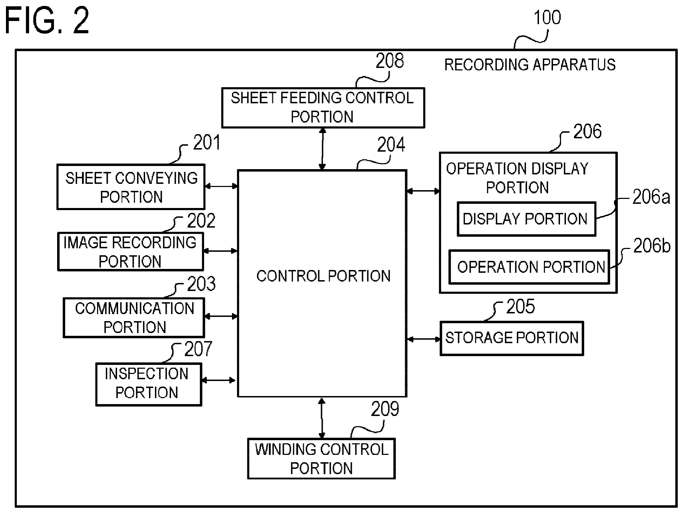

FIG. 2 is a block diagram illustrating a control configuration of the recording apparatus 100. The control configuration of the recording apparatus 100 will now be explained in detail. As illustrated in the drawing, the recording apparatus 100 includes, as an example, a sheet conveying portion 201, an image recording portion 202, a communication portion 203, a control portion 204, a storage portion 205, an operation display portion 206, an inspection portion 207, a sheet feeding control portion 208, and a winding control portion 209.

The sheet conveying portion 201 is a conveying mechanism configured to convey the roll sheet 111 inside of the recording apparatus 100. For example, the sheet conveying portion 201 conveys the roll sheet 111 fed by the sheet feeding control portion 208 to the image recording portion 202, using a plurality of rollers 121, and conveys the roll sheet 111 having passed through the image recording portion 202 to the winding control portion 209. The winding control portion 209 is controlled by the control PC 119 so as to cause the sheet ejecting device 105 to wind the roll sheet 111 being fed thereto. The image recording portion 202 causes the printing device 102 to record images on the roll sheet 111 fed under the control of the sheet feeding control portion 208, on the basis of the print data an output of which is instructed. The sheet conveying portion 201 conveys the roll sheet 111 having the image recorded by the image recording portion 202 to the sheet ejecting device 105. The communication portion 203 is implemented as a communication control card such as a local area network (LAN) card. The control PC 119 transmits and receives various kinds of data to and from an external device (for example, a personal computer) connected to a communication network such as a LAN and a wide area network (WAN).

The control portion 204 includes a central processing unit (CPU) and a random access memory (RAM), for example. The CPU in the control portion 204 reads various programs, such as system programs and processing programs, stored in the storage portion 205, and loads such programs onto a RAM, and executes various kinds of processing in accordance with the programs thus loaded. For example, the control portion 204 can perform image recording processing for executing an image recording job (hereinafter, referred to as a job) on the control PC 119, in response to an instruction from the user. The storage portion 205 is configured as, for example, a non-volatile semiconductor memory (what is called a flash memory) or a hard disk drive (HDD) mounted on the control PC 119. The storage portion 205 stores therein various programs including the system programs and the processing programs executed by the control portion 204, and various types of data required in executing such programs.

The operation display portion 206 is implemented as a liquid crystal display (LCD) of the UI operation panel 101 with a touch panel, for example, and includes a display portion 206a and an operation portion 206b. The operation display portion 206 functions as an input portion (setting unit) allowing a user to enter command items related to the operations of the recording apparatus 100, such as a selection as to whether a rewinding operation, which will be described later, is to be executed. The display portion 206a displays various types of information on the display screen, in accordance with display control signals received from the control portion 204. The operation portion 206b has various operation keys, such as numeric keys and a start key, and is configured to receive various input operations from a user, and to output operation signals to the control portion 204. The operation display portion 206 is used in job information setting prior to execution of a job, for example. A user is enabled to provide any settings on a sheet for use (a type of sheet), information of a printing speed, the number of printed sheets, the number of copies to be printed, or the length of the printing, the weight of the printing, or the diameter of the printing.

An operation of the recording apparatus 100 for recording an image on the roll sheet 111 will now be explained. To begin with, a user creates job data on an external device, performs printing setting for the job and settings of the number of rolls to be delivered, and transmits these pieces of information to the recording apparatus 100 via the communication network. The control portion 204 in the recording apparatus 100 receives the job data and a job ticket including information of the job printing setting, the setting of the number of rolls to be delivered, and the like, from the external device, via the communication portion 203. The inspection portion 207 is a device for checking whether there are any ink ejection defects in the image printed on the sheet. The inspection portion 207 checks for the presence of ink ejection defects in printed images by printing a pattern to be used for ink-ejection defect inspections, and by reading the pattern using a scanner, and stops the recording apparatus 100 upon detecting an ejection defect. As the inspection methods, there are various methods including a method of printing a detection pattern and reading the detection pattern with a scanner, a method of directly reading and inspecting the printed image using a camera or scanner, and a method of monitoring the conditions of ink ejections from the nozzle. Used in this embodiment is a configuration for checking the presence of the ink ejection defects by printing a detection pattern, causing the connection scanner device 107 to read the detection pattern, and causing the control PC 119 to analyze the read image.

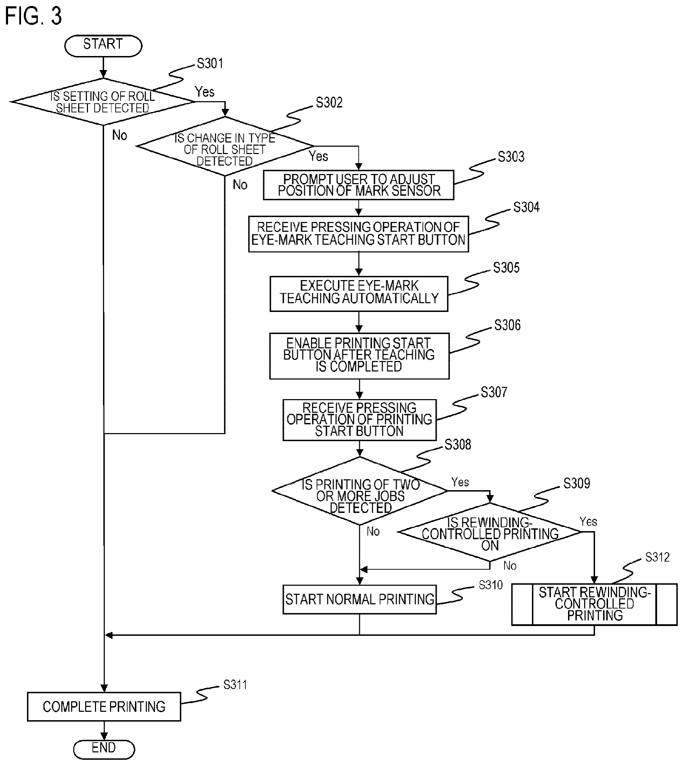

FIG. 3 is a flowchart at the time of basic printing.

The control portion in the recording apparatus 100 according to the embodiment determines whether wasted paper can be reduced on the basis of base material information pertinent to the roll sheet 111, the printing information included in the job information, and the information having been set by the user. In the embodiment, an eye mark is used as an identification mark for obtaining information of a position on the roll sheet 111 being conveyed; however, such an eye mark may fail to be read successfully when a different type of roll sheet 111 is used, because the eye mark may be on a different background color or exhibit a different degree of reflection depending on the type of roll sheet 111. Therefore, when the type of sheet is changed, teaching of an eye mark becomes necessary.

As illustrated in FIG. 3, to begin with, the control PC 119 detects whether the roll sheet 111 has been set in S301. If it is detected that a roll sheet 111 has been set, the control PC 119 detects whether there has been any change in the type of roll sheet thus set, in S302. As a specific example of the detection method, the control PC 119 as a detection portion detects that a roll sheet has been set, when the user sets information on the roll sheet thus set, on the UI operation panel 101, after the roll sheet is set. The control PC 119 then determines whether the roll sheet after the roll sheet setting operation is of a type different from that before the operation.

If the roll sheet has been set, and if the roll sheet is of a different type, the user is prompted to adjust the position of a mark sensor in S303. Adjusting the position of the mark sensor herein is an operation for moving the mark sensor to a position where the eye mark as an identification mark is readable. Upon completing the adjustment, the user presses an eye-mark teaching start button. When the control PC 119 detects pressing of the eye-mark teaching start button in S304, the control PC 119 as a setting portion automatically starts eye-mark teaching in S305. The eye-mark teaching operation executed herein is an operation of printing a plurality of eye marks on the new type of sheet, and setting a threshold to where the eye mark is most readable on the sheet.

Upon completion of the teaching, a print execution start button on the UI operation panel 101 is enabled in S306 so that the user can start printing. When the print execution start button is pressed by the user in S307, the control PC 119 checks for the number of jobs scheduled to be executed in S308. If there are a plurality of jobs, the control PC 119 checks for a setting of the rewinding-controlled printing in S309. If the number of jobs scheduled to be printed, having been checked, in S308 is one, or if the setting of the rewinding-controlled printing, having been checked in S309, is OFF, normal printing (normal recording operation) is started in S310. In S311, the printing is completed and the sequence is ended. If the number of jobs scheduled to be printed, having been checked in S308, is two or more, and the setting of the rewinding-controlled printing, having been checked in S309, is ON, the rewinding-controlled printing (rewinding recording operation) is started in S312.

In S309, the control PC 119 may be additionally configured to determine as to whether the rewinding-controlled printing is executable. Specifically, if job conditions having been set (at least one of a first job condition and a second job condition) include any condition not permitting the execution of the rewinding-controlled printing, normal printing (second operation) is executed. In the normal printing, after all of the images corresponding to the plurality of respective jobs in the queue are recorded, the sheet is cut in units of a predetermined area, each including a recorded image for one of such jobs. The products corresponding to the respective jobs are thus obtained and collected. The conditions not permitting the execution of the rewinding-controlled printing will be described later in detail.

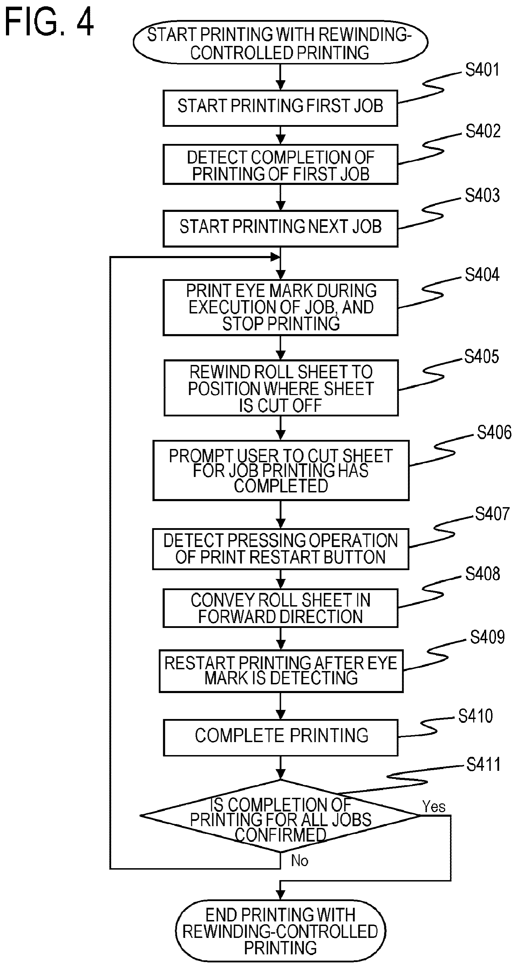

FIG. 4 is a flowchart at the time of the rewinding-controlled printing, in the recording apparatus 100 according to the embodiment.

During consecutive printing, in which a plurality of images are recorded consecutively on the sheet, for a plurality of respective consecutive jobs, the recording apparatus 100 is enabled to control to cut off a product corresponding to each one of the jobs (to cut a predetermined area including the image recorded as a result of one job, off the sheet) every time one of such jobs is executed. The control for cutting off the product every time a job is executed includes the rewinding operation, by which the sheet is conveyed in a reverse conveying direction so as to bring the leading end of the area corresponding to the product (the predetermined area) to the cutting position. The recording apparatus 100 according to the embodiment is enabled to be set, in advance, as to whether the rewinding-controlled printing, which is the control for cutting off a product, is to be executed. In such rewinding-controlled printing, the recording apparatus 100 controls, upon completion of recording of a first image, to execute the operation of recording a second job halfway through, instead of immediately cutting off the first area of the sheet including the first image, and to then cut off the first area as a product. In other words, the rewinding-controlled printing executed by the recording apparatus 100 according to the embodiment includes an operation (first operation) for executing recording of a first image in response to a first job, followed by starting recording of a second image in response to a second job, and then stopping the recording of the second image halfway through. The control sequence for the rewinding-controlled printing will now be explained with reference to FIG. 4.

As illustrated in FIG. 4, in the rewinding-controlled printing, in S401, the control PC 119 starts control for printing a first job, to cause the printing device 102 to print the image corresponding to the content of the job. If the control PC 119 detects the completion of the first job (first job) in S402, the control PC 119 starts printing the following second job (second job) in S403. The printing device 102 having started printing the second job in S403, gives an eye mark to the trailing end of the image having been printed halfway, and stops printing, in S404. In order to cut off the first recorded sheet, which is the product of the first job completed in S402, the plurality of rollers 121 rewind the roll sheet, in S405, to the position where the sheet can be cut. In S406, information prompting the user to cut off the first recorded sheet is displayed on the UI operation panel 101. After completing cutting the first recorded sheet, the user presses down a print restart button on the UI operation panel 101. After the control PC 119 detects that the print restart button has been pressed in S407, the plurality of rollers 121 carry the roll sheet in the forward direction until the eye mark is detected in S408. After the mark detection sensor 120 detects the eye mark, in S409, the printing device 102 restarts the execution of the second job having been started in S403, and completes the printing in S410. If the control PC 119 confirms the presence of a job not having been executed yet in S411, the control PC repeats S403 to S410. If the control PC 119 confirms completion of execution of all of the jobs in S411, the printing sequence is ended.

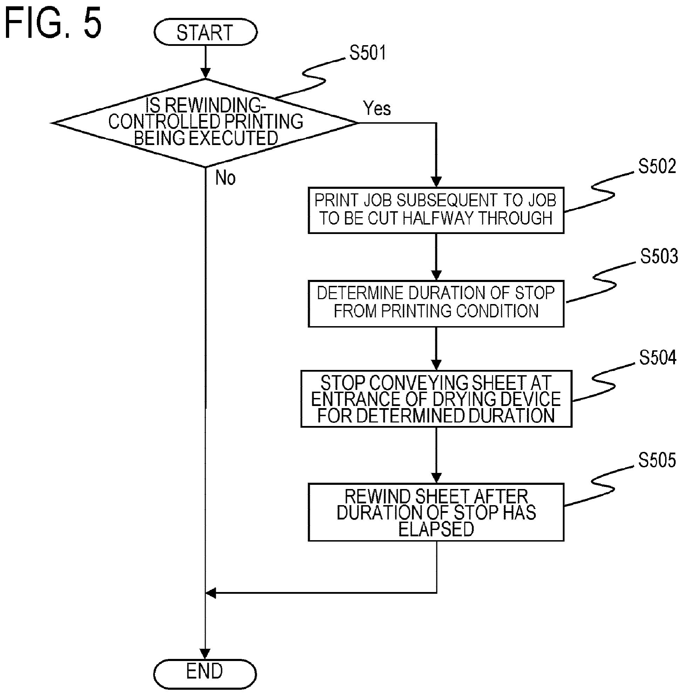

FIG. 5 is a flowchart for determining the duration for stopping conveying sheet at the entrance of the drying device, in the process of the rewinding-controlled printing performed by the recording apparatus 100 according to the embodiment.

In the rewinding-controlled printing, after recording of the second image is started following the recording of the first image, and stopped halfway through, the second image, the recording of which is incomplete (incomplete image), is subjected to a fixing process simultaneously with the first image, before the sheet is rewound. At the time of fixing the incomplete image of the second image onto the sheet (fixing operation), conveyance of the sheet is controlled so that an unrecorded area of the sheet, the unrecorded area being an area following the incomplete image of the second image, is not passed through the fixing portion. The reason why such a fixing operation is performed is that, if an unrecorded area of the sheet following the incomplete image of the second image is subjected to the fixing process before any image is recorded thereon, the second image, the recording of which is to be restarted later in time, may be affected thereby. Specifically, conveyance of the sheet is stopped at the point where the unrecorded area following the incomplete image of the second image reaches the position before the fixing portion (a fixing area where the sheet is subjected to the fixing process of the fixing portion along the sheet conveying passage), and the incomplete image of the second image is fixed while the sheet is kept at the position. In other words, a predetermined area including the trailing end of the incomplete image of the second image (a trailing-end side area of the incomplete image, the area being an area overlapping with the length of the fixing area in the conveying direction) is fixed onto the sheet using a fixing process different from the ordinary fixing process in which the image is fixed to the sheet while the sheet is being conveyed.

The first image and the second image described herein are images each composed of a group of a plurality of identical images. In other words, each of the first image and the second image is composed of a group of identical images in which the same images are formed repeatedly at predetermined intervals along the sheet conveying direction. The images included in the first image and the images included in the second image may be different images or the same images. In other words, the incomplete image corresponds to an area including a certain number of identical images, counting from the first one, among the plurality of identical images included in the second image, and the boundary at which the recording is stopped is in an area between the plurality of identical images. In this manner, denoting the number of images included in the second image as N, the control is performed so that the recording is stopped after m images are recorded, and the printing is then restarted to record (N-m) images.

As to the duration of a conveying stop made for the fixing process, at least the time required for the trailing end of the incomplete image to be fixed onto the sheet is ensured. If the image is not dried sufficiently, there is a concern that, as the sheet is wound about the sheet feeding device 104, the image having been not sufficiently fixed may become rubbed against the rear surface of the sheet, and become disfigured or smeared on the rear surface of the sheet. The time required for fixing varies depending on the type of sheet. Furthermore, although the unrecorded area of the sheet following the incomplete image of the second image is not directly subjected to the fixing process, the unrecorded area may be somewhat affected by the fixing process applied to the incomplete image, because such an unrecorded area is adjacent to the incomplete image. In other words, the recording quality may be affected if the subsequent recording is restarted while there still is heat remaining from the fixing of the incomplete image. For this reason, the duration of the conveying stop may be set by considering the time required for the heat of the unrecorded area transferred from the heated incomplete image to cool (cooling period), from when the fixing of the incomplete image of the second image is completed and the operation of the fixing portion is stopped, for example. In such a case, because the temperature of the unrecorded area only needs to drop to a level suitable for recording before starting the recording the remaining second image on the unrecorded area, the duration of the conveying stop may be set by taking the time required in the rewinding operation into account (a cooling period accrued during the rewinding operation). For example, the duration of the conveying stop may be set on the basis of the speed at which the sheet is conveyed along the reverse conveying direction, and the length of the conveying passage from the fixing portion to the recording portion. If the duration of the conveying stop (fixing time) is too long, by contrast, sheet shrinkage or image discoloration may occur. Because such an effect of residual heat still remains as a concern. Even if the operation of the fixing portion is stopped while the conveying operation is stopped, the duration of the conveying stop may be set within a range where such an effect does not become apparent. A control sequence of a sheet-conveying-stopping operation during the rewinding-controlled printing will now be explained with reference to FIG. 5.

If the duration of the printing stop in S404 is too short or too long, the colors of the image cannot be ensured because the ink may not dry sufficiently or the sheet may become degraded. An appropriate duration varies depending on factors such as the conveying speed, the length of the conveying passage, and the type of the roll sheet. Therefore, the duration of the stop is calculated on the basis of such printing conditions.

In S501, setting information is read from the storage portion 205 mounted on the control PC 119 to determine whether to execute the rewinding control. The setting information stored in the storage portion 205 is set by a user via the UI operation panel 101. In the rewinding-controlled printing, the printing device 102 executes printing of a job subsequent to the job for which the sheet is to be cut off, halfway through completion, in S502. The control PC 119 obtains information on the conveying speed, the length of the conveying passage, and the type of the roll sheet from the storage portion 205 in S503. The control PC 119 then determines the duration of the stop made at the entrance of the drying device, on the basis of the acquired information, and writes the duration to the storage portion 205. In S504, the printing device 102 and the plurality of rollers 121 are stopped at the entrance of the drying device 106 for drying the printing basic colors (CMYK). In the embodiment, in order to ensure that there is no area heated prior to printing, the rewinding-controlled printing is not used when any spot color such as white ink is to be used. Therefore, it is not assumed that the sheet is stopped prior to the drying device 112 that is for drying the spot colors such as white ink. In S503, after the control PC 119 detects that the determined duration of the stop has elapsed, the plurality of rollers 121 rewind the sheet to the position where the sheet corresponding to the job can be cut in S505.

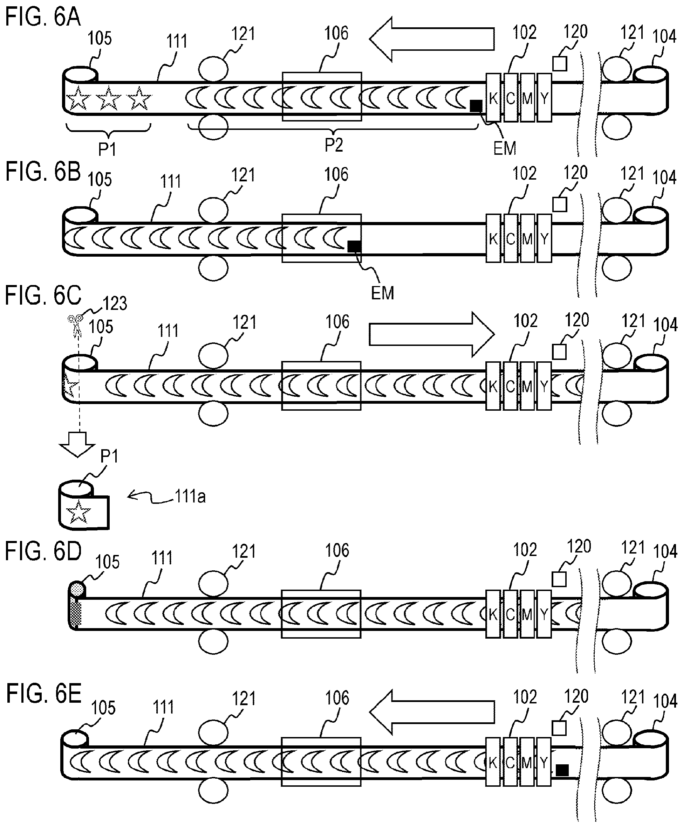

FIGS. 6A to 6E are diagrams illustrating the movement of the roll sheet in the process of the rewinding-controlled printing, in a simplified manner. In FIGS. 6A to 6E, mechanisms that are not controlled during the rewinding-controlled printing, such as the recording unit 116 for performing spot color printing, among the configurations of the recording apparatus 100 illustrated in FIG. 1, are not illustrated.

The printing device 102 executes printing on the roll sheet 111, and the drying device 106 dries the ink. In the description herein, a first area that is a predetermined area of the roll sheet 111, including a first image P1 recorded for the first job, is cut off as a first product. The first area may include margins at the leading end and the trailing end of the image, respectively. When the first image is composed of a plurality of images, a margin may be included between the plurality of images, too. In the same manner, a second area that is a predetermined area of the roll sheet 111, including a second image P2 recorded for the second job, is cut off as a second product.

FIG. 6A illustrates a setting prior to stopping printing (prior to the execution of the sheet-conveying-stopping operation described above). That is, after the first image P1 for the first job is printed to the end, the second image P2 for the second job is printed halfway, and an eye mark 604 is printed at the trailing end of the incomplete image of the second image P2.

FIG. 6B illustrates a setting during the temporary stop in the printing (while the sheet-conveying-stopping operation is being executed). The sheet is temporarily stopped being conveyed at the timing at which the eye mark 604 arrives at the entrance of the drying device 106. The area (drying area) in which the drying device 106 performs the drying process (fixing process) along the sheet conveying passage stretches across a predetermined range (length) along the sheet conveying passage, the predetermined range being determined depending on the configuration of the drying device 106. Accordingly, the drying area of the drying device 106 overlaps with a predetermined range, the predetermined range includes the trailing end of the incomplete image of the second image P2.

FIG. 6C illustrates how a product 111a corresponding to the first job is cut off. Specifically, to begin with, the roll sheet 111 is rewound to the position where the first image P1 corresponding to the first job can be cut off. That is, the sheet is conveyed in the reverse conveying direction so that a boundary on the roll sheet 111 between the first area including the first image P1 and the second area including the incomplete image of the second image P2 corresponding to the second job is positioned at the cutting position of the cutter portion 123. The user then cuts off the part of the roll sheet 111 on which the first image P1 is recorded, and a product 111a is thus obtained.

FIG. 6D illustrates how the leading end of the roll sheet 111 is attached to the winding core of the sheet ejecting device 105. The leading end of the roll sheet 111 resultant of cutting off the part including the first image P1 of the first job is attached and connected to the winding core of the sheet ejecting device 105 so that the sheet feeding device 104 and the sheet ejecting device 105 can convey the roll sheet 111.

FIG. 6E illustrates how printing is restarted in response to the print restart button being pressed by the user. To begin with, the roll sheet 111 is conveyed until the trailing end of the incomplete image of the second image P2 arrives at the entrance of the printing device 102 (recording portion). The roll sheet 111 may be conveyed reversely or forwardly depending on the device configuration and the content of the second image P2. When the training end of the incomplete image of the second image P2 arrives at the entrance of the printing device 102 (recording portion), the roll sheet 111 starts being conveyed forwardly to restart the recording of the second image P2 from where printing of the incomplete image of the second image P2 has ended. In such conveying control, the position of the incomplete image of the second image P2 (the position of the trailing end of the incomplete image) is confirmed by causing the mark detection sensor 120, as a reading portion, to detect the eye mark 604 that is an identification mark indicating the position of the trailing end of the incomplete image of the second image P2.

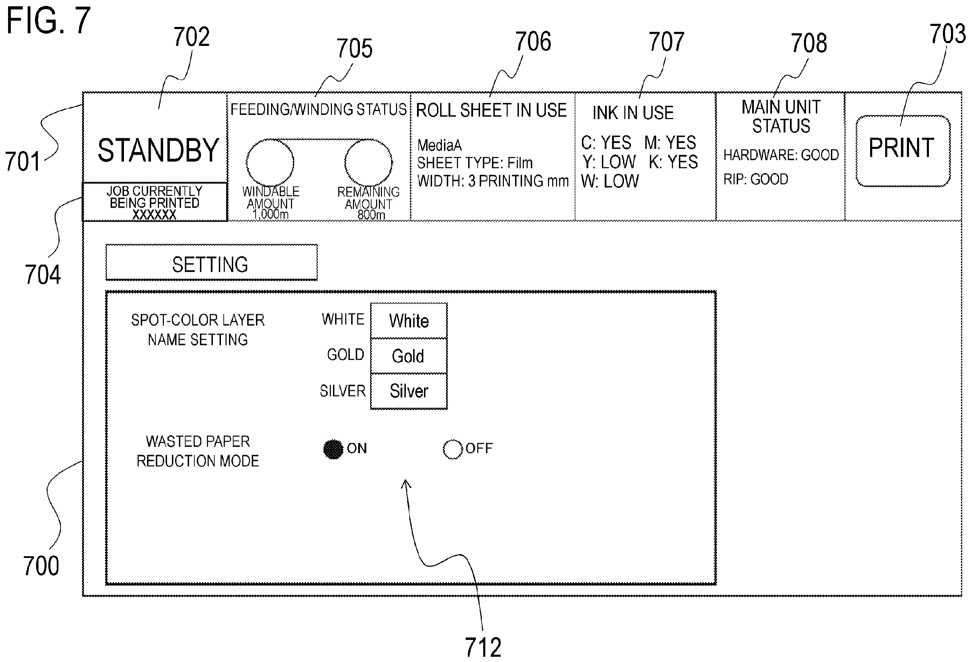

FIGS. 7 to 10 illustrate an example of the UI screen displayed during the rewinding-controlled printing.

In FIGS. 7 to 10, an entire UI screen 700 corresponds to the entire UI displayed on the operating panel of the apparatus. In a status display area 701, summary information about the status of the apparatus, such as the current condition of the apparatus and information about the job the printing of which is currently being executed, is displayed. An apparatus operation status indicator 702 indicates the status of the apparatus. In FIGS. 7 to 10, the operation status indicator 702 indicates "standby", that is, currently waiting for printing. Statuses other than "standby" include "stop" and "printing". The indication of "standby" in the apparatus operation status indicator 702 indicates that the mechanism of the recording apparatus 100 has been completely activated, and is ready to execute printing at any time. While "standby" is being displayed, the print button 703 is enabled. When the button is pressed, the printing of an RIP-processed print job is started. A current print job indicator 704 displays the name of the job being printed. A remaining printing medium information indicator 705 displays the remaining amount of roll sheet 111, and a printing medium information indicator 706 displays the name of the roll sheet 111 and the like. An ink status indicator 707 displays the type of ink being used and the remaining amount of the ink, for example. A main unit status indicator 708 displays the statuses of the main unit hardware and the power supply of the RIP processing portion. Although some examples of the types of the status display area 701 have been explained in this embodiment, the present invention is not limited to these functional indicators, and it is also possible to display any other statuses.

FIG. 7 illustrates an example of a screen display for setting the execution of rewinding control. To execute the rewinding control, the user performs settings on a setting screen 711 illustrated in FIG. 7 on the UI operation panel 101, before executing the printing. The user accesses a screen for operating settings of the recording apparatus 100 via a menu or the like, and performs settings from the items of a rewinding control setting 712. For example, by setting the rewinding control setting 712 ON, the rewinding-controlled printing is enabled. When the rewinding-controlled printing is OFF, the printing is executed in the normal mode. The rewinding control setting entered by the user on the UI operation panel 101 is stored in the storage portion 205 mounted on the control PC 119.

The rewinding control setting stored in the storage portion 205 is used in determining whether to execute the rewinding-controlled printing in S309 in FIG. 3. Depending on the type of roll sheet, the rewinding-controlled printing cannot be performed; therefore, in such a case, the rewinding control setting 712 is disabled to be set ON (so as not to accept any user's input).

An example of the condition not permitting the execution of the rewinding-controlled printing includes a situation in which the conveying speed, which is set on the basis of the type of the roll sheet 111, makes it difficult to perform the control of the rewinding-controlled printing. Because the time required for the drying (fixing) process differs depending on the type of the roll sheet 111, such a difference in the processing time is absorbed by changing the conveying speed. Therefore, a different conveying speed during the printing operation may be set depending on the type of the roll sheet 111. Because the rewinding control requires control for conveying the roll sheet 111 in such a manner that the trailing end of the incomplete image of the second image stops at the entrance of the drying device 106 (in such a manner that the leading end of the unrecorded area following the incomplete image stops prior to the entrance of the drying device 106), depending on the configuration of the recording apparatus 100 (due to the balance between the length of the sheet conveying passage and the sheet conveying speed), it may be difficult to stop conveying the roll sheet 111 at such a target position. In such a case, execution of the rewinding-controlled printing is not accepted. For example, the rewinding-controlled printing is allowed for a PEF film, for the PEF film being conveyed at a speed of 20 mpm, because the speed can be decelerated quickly enough to stop the sheet at the target position; whereas the rewinding-controlled printing is not permitted for an art paper conveyed at a speed of 40 mpm, because the conveying speed cannot be decelerated to a level allowing such a stop to be made.

Another example of the condition not permitting the execution of the rewinding-controlled printing is a condition related to the susceptibility of the roll sheet 111 or the ink to the heat. For example, the determination as to whether to permit the execution of the rewinding-controlled printing may be made on the basis of whether the image deforms significantly by being subjected to heating after the printing. Because a part of the sheet may become heated twice by rewinding the sheet, a sheet that shrinks significantly during the second heating may experience a degradation in the quality. The rewinding-controlled printing therefore may be configured unacceptable for such a sheet. The determination as to whether to permit the execution of the rewinding-controlled printing may also be made on the basis of whether the color changes significantly by being subjected to heating after the printing. For example, the rewinding-controlled printing may be configured unacceptable for an image formed with a spot color ink, as described earlier. The conditions for permitting (or not permitting) the execution of the rewinding-controlled printing are not limited to those described above, and may be set as appropriate on the basis of factors such as the configuration of the apparatus.

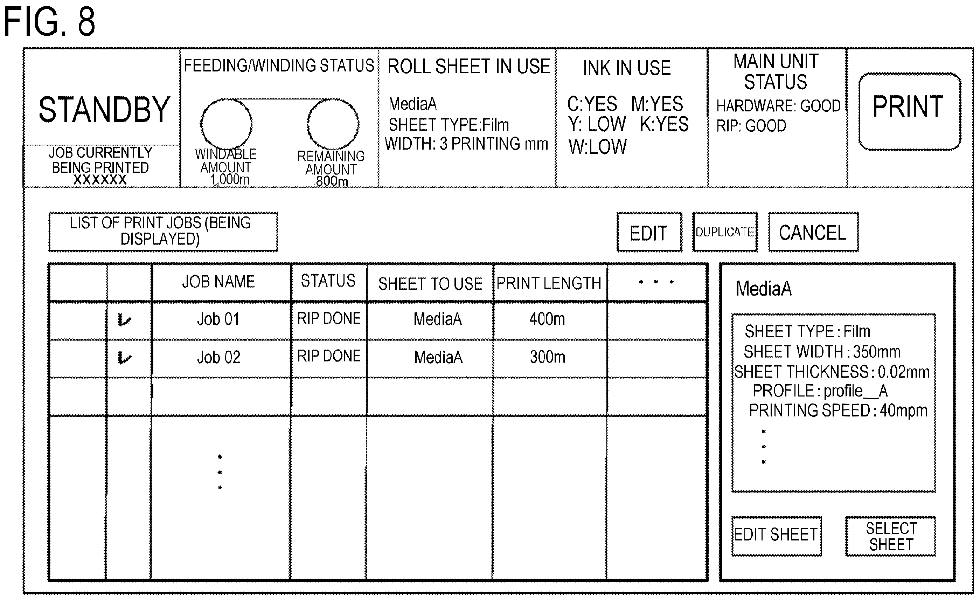

FIG. 8 illustrates an example of a print confirmation screen 731. When the print button 703 in the status display area 701 is pressed in the setting screen 711 illustrated in FIG. 7, the screen transitions to the print confirmation screen 731 illustrated in FIG. 8. When an OK button 733 is pressed on the print confirmation screen 731, the control PC 119 receives a pressing operation on the print execution start button (S307 in FIG. 3), and printing is started. The print confirmation screen 731 presents information required in executing printing. When a cancel button 732 is pressed, the printing is not executed. Examples of the information required in executing printing includes a rewinding control execution setting 734, a sheet length 735 required for executing printing, and a printing time 736 required, and job information 737 for which execution of printing is scheduled. Although some examples of the items to be displayed have been explained, the items to be displayed are not limited thereto, and other information may also be displayed.

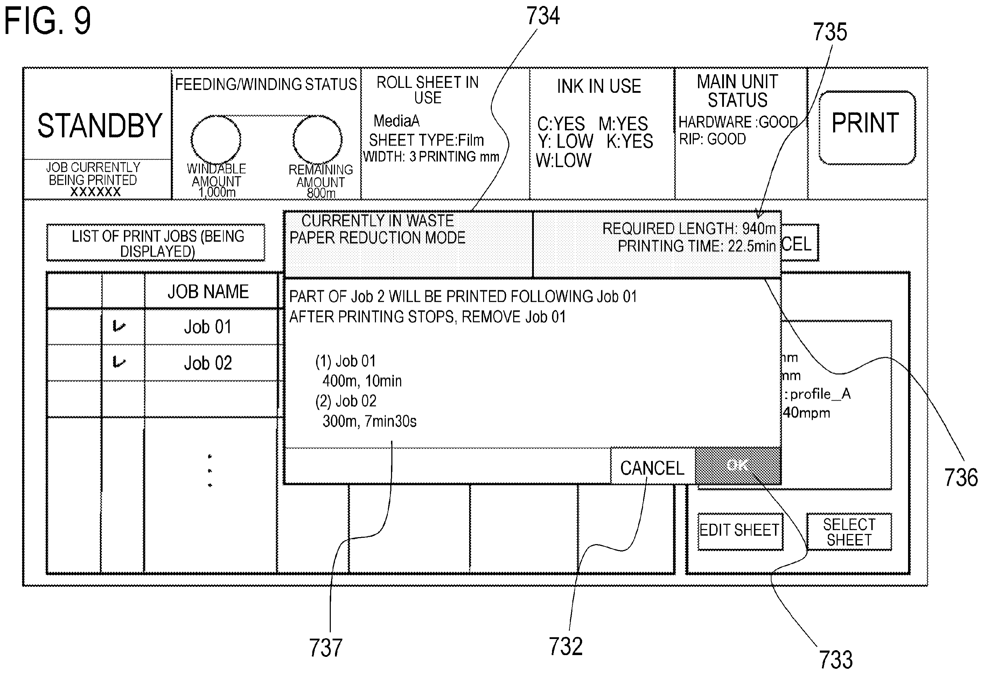

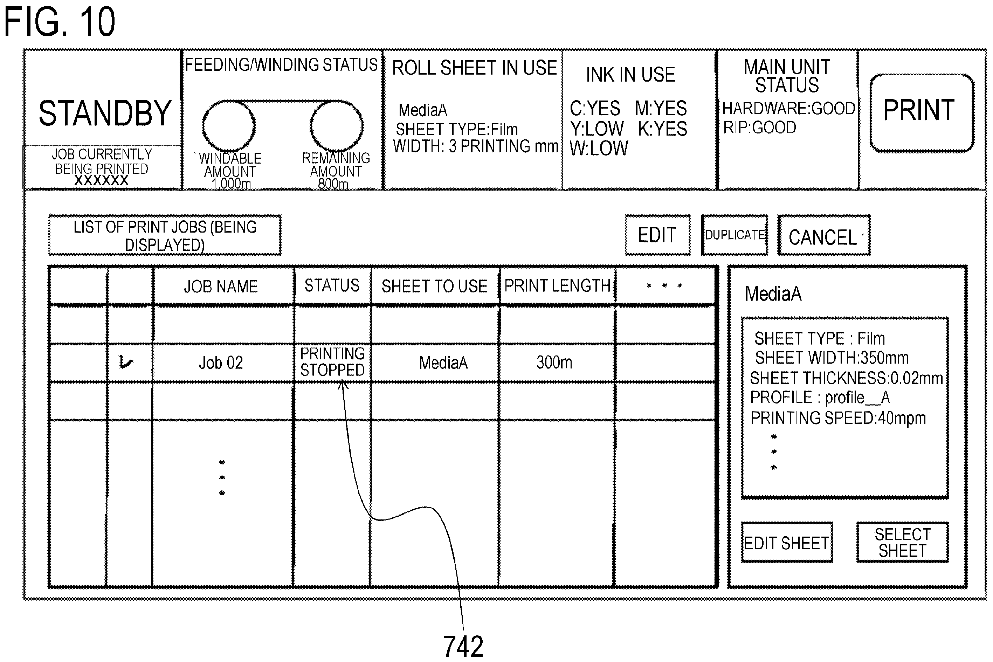

A job list screen 721, such as that illustrated in FIG. 9, presents the job to be executed upon receiving a pressing operation of the print execution start button (S307 in FIG. 3). When the printing of the second job (Job 02) is stopped halfway through (S404 in FIG. 4), a post-temporary stop screen 741, such as that illustrated in FIG. 10, is presented. The post-temporary stop screen 741 presents the status of the job the printing of which is stopped halfway through, as "pausing printing" 742.

According to the embodiment, the quality of the recorded product can be ensured while reducing the wasted paper at the time of recording of a plurality of jobs. Although the rewinding-controlled printing for reducing the wasted paper is enabled or disabled depending on the conditions of a job (such as the type of roll sheet and the configuration of the apparatus), because the apparatus is configured to automatically determine whether the rewinding-controlled printing is to be enabled or disabled, usability can be improved. Furthermore, not only determination as to whether the rewinding-controlled printing is enabled or disabled is made automatically, the eye mark is adjusted automatically when the roll sheet is replaced. In this manner, the usability can be further improved.

The technique described herein can contribute to realization of a sustainable society such as a decarbonized society or recycling-oriented society.

Each of the configurations according to the embodiment described above may be combined with any others.

Various embodiments have been described in detail above but it will be understood that the present disclosure is not limited to these embodiments and encompasses all modifications, variants, alternatives and equivalents falling within the scope of the appended claims.

## Claims

1. A recording apparatus comprising:
a feeding portion configured to rotatably support a roll sheet that is a winding of a sheet, and to feed the sheet from the roll sheet;
a recording portion configured to record an image on the sheet being fed from the roll sheet supported by the feeding portion, and being conveyed in a conveying direction;
a fixing portion configured to fix the image recorded by the recording portion onto the sheet;
a winding portion configured to wind the sheet having the image recorded by the recording portion, on a downstream side of the fixing portion in the conveying direction;
a control portion configured to execute the control to record a plurality of images consecutively onto the sheet, for a first job and a second job following the first job; and
a setting unit configured to provide a predetermining setting for collecting a product that includes a first image recorded on the sheet, the first image being recorded for the first job,
wherein, in a case where the setting is made by the setting unit, and the feeding portion and the winding portion are caused to execute a rewinding operation for conveying the sheet in a reverse conveying direction, the control portion executes a first operation of starting recording a second image for the second job following the first job, on a second area following a first area of the sheet, the first area being an area where the first image is recorded, and stops recording the second image halfway through.

2. The recording apparatus according to claim 1,
wherein, in a case where the rewinding operation is to be executed,
a fixing operation performed after recording of the second image is stopped halfway through in the first operation is an operation of causing the fixing portion to fix an incomplete image of the second image onto the sheet, while controlling conveying the sheet so as not to pass an unrecorded area that follows the incomplete image through the fixing portion.

3. The recording apparatus according to claim 2,
wherein the fixing operation is an operation of causing the fixing portion to fix the incomplete image onto the sheet while the sheet is at a conveying stop where the unrecorded area is positioned prior to the fixing portion.

4. The recording apparatus according to claim 3,
wherein a duration for which the sheet is kept at the conveying stop during the fixing operation is a time required for a trailing end side area including a trailing end of the incomplete image to become fixed to the sheet, the trailing end side area being an area overlapping with a fixing area of the fixing portion along a conveying passage of the sheet.

5. The recording apparatus according to claim 3,
wherein a duration for which the sheet is kept at the conveying stop during the fixing operation is set on the basis of a type of the sheet.

6. The recording apparatus according to claim 3,
wherein a duration for which the sheet is kept at the conveying stop during the fixing operation is set on the basis of a speed at which the sheet is conveyed in the reverse conveying direction, and a length of a conveying passage from the fixing portion to the recording portion.

7. The recording apparatus according to claim 2,
further comprising a cutting portion configured to cut the sheet at a cutting position between the fixing portion and the winding portion,
wherein, after the fixing operation is completed, the recording apparatus conveys the sheet in the reverse conveying direction, so as to rewind the sheet toward the feeding portion and to bring a boundary between the first area and the second area to the cutting position.

8. The recording apparatus according to claim 7,
wherein the recording apparatus restarts recording the second image after the first area is cut off from the sheet as the product by causing the cutting portion to cut the sheet along the boundary, and after a leading end of the second area is connected to the winding portion.

9. The recording apparatus according to any one of claims 1 to 8,
wherein the setting unit is enabled to set whether execution of the rewinding operation is required, in advance.

10. The recording apparatus according to any one of claims 1 to 9,
wherein each of the first image and the second image includes a plurality of images.

11. The recording apparatus according to any one of claims 1 to 10,
wherein, in a case where a condition of the first job includes a condition not permitting execution of the rewinding operation,
the control portion executes a second operation of recording the second image for the second job to an end, without stopping the recording halfway through, following the recording of the first image for the first job.

12. The recording apparatus according to claim 11,
wherein execution of the rewinding operation is not permitted in a case where a sheet conveying speed set on the basis of a type of the sheet is a conveying speed not allowing the sheet being conveyed to stop at a position at which an unrecorded area of the sheet, the unrecorded area being an area following an incomplete image of the second image, is positioned prior to the fixing portion, in the fixing operation in which the fixing portion fixes the incomplete image of the second image onto the sheet.

13. The recording apparatus according to claim 11 or 12,
wherein, in a case where the sheet is an art paper, execution of the rewinding operation is not permitted.

14. The recording apparatus according to any one of claims 11 to 13,
wherein, in a case where the sheet is a PEF film, execution of the rewinding operation is permitted.

15. The recording apparatus according to any one of claims 1 to 14,
wherein the recording portion is configured to record the image by ejecting ink onto the sheet, and
wherein the fixing portion is configured to heat and to dry the ink having been ejected onto the sheet.

16. The recording apparatus according to any one of claims 1 to 15,
wherein, in a case where a condition of the second job includes a condition not permitting execution of the rewinding operation,
the control portion executes a second operation of recording the second image for the second job to an end, without stopping the recording halfway through, following the recording of the first image for the first job.

17. The recording apparatus according to claim 16,
wherein the recording portion is capable of recording an image using a process color ink, and an image using a spot color ink, and
wherein the rewinding operation is not permitted in a case where the second image is the image using the spot color ink.

18. The recording apparatus according to any one of claims 1 to 17,
wherein the setting unit does not accept the setting in a case where conditions of the first job or the second job includes a condition not permitting execution of the rewinding operation.

19. The recording apparatus according to any one of claims 1 to 18,
further comprising a reading portion configured to read an identification mark recorded on the sheet,
wherein the recording portion is configured to record the identification mark for indicating a trailing end position of an incomplete image of the second image, on the sheet in the first operation, and
wherein the control portion is configured to control to convey the sheet, in a fixing operation of causing the fixing portion to fix the incomplete image of the second image onto the sheet, on the basis of a position of the identification mark read by the reading portion.

20. The recording apparatus according to claim 19,
further comprising:
a setting portion configured to set a threshold used by the reading portion to read the identification mark; and
a detection portion configured to detect whether there is change in a type of a roll sheet attached to the feeding portion,
wherein the setting unit is enabled to set whether execution of the rewinding operation is required, in advance, and
wherein, in a case where the detection portion detects that the type of the roll sheet attached to the feeding portion has changed, the setting portion sets the threshold before setting whether the rewinding operation is required.
